(19) Europäisches Patentamt
European Patent Office
Office européen des brevets

(11) **EP 3 340 551 A1**

(12) **EUROPEAN PATENT APPLICATION**

(43) Date of publication:
**27.06.2018 Bulletin 2018/26**

(21) Application number: **16306751.5**

(22) Date of filing: **21.12.2016**

(51) Int Cl.:
***H04L 12/801*** *(2013.01)*     *H04L 12/823* *(2013.01)*
***H04L 12/833*** *(2013.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Alcatel Lucent
91620 Nozay (FR)**

(72) Inventors:
• **DE VLEESCHAUWER, Danny
2018 Antwerpen (BE)**

• **TANG, Siyu
2018 Antwerpen (BE)**

(74) Representative: **D'Halleweyn, Nele Veerle Trees
Gertrudis et al
Arnold & Siedsma
Bezuidenhoutseweg 57
2594 AC The Hague (NL)**

Remarks:
Amended claims in accordance with Rule 137(2)
EPC.

(54) **METHOD AND SYSTEM FOR QUEUE MANAGEMENT**

(57) A method for queue management in a packet-switched network comprising one or more intermediate network nodes, the method comprising at an intermediate network node: receiving packets; based on the received packets, determining a number of flows of the received packets; and signalling congestion of the received packets in accordance with a congestion signalling probability based on the determined number of flows.

FIG. 1

**Description**

Field of Invention

The present invention relates to queue management. Particular embodiments relate to a method and a computer program product for queue management in a packet-switched network comprising one or more intermediate network nodes, and to a system for queue management in a packet-switched network.

Background

Most flows on packet-switched networks, such as the Internet, are congestion controlled (e.g. via TCP (transport control protocol)). Congestion control may comprise two sets of interacting distributed algorithms: 1) the first set of algorithms may determine how flows react to congestion signals and 2) the second set may determine how network nodes may signal congestion.

The congestion reaction algorithm in an end-point of a flow may describe how that flow may determine the rate at which it can send information into the network based on the congestion signals it gets from that network.

The congestion signalling algorithm in a network node may describe how that network node may embed signals in a flow in order to inform the flow of the amount of congestion that the network node experiences.

In the past network nodes typically had a more passive role (e.g. packets were delayed or dropped when a buffer happened to get filled or to overflow). Nowadays network nodes such as routers are more actively taking part in congestion signalling: a network node may proactively (drop or) put marks in packet headers such that congestion may be signalled - and flows may react - before networks nodes get overloaded, thus helping to avoid packet delay, packet delay variation and bursts of lost packets.

Such active participation has received increased attention, because the aim of congestion control has shifted focus: while in the past the aim was to fully utilize the links in the network, more recently the focus has been shifted to keeping the queuing delay that packets experience in the network better under control, of course while still filling the network node sufficiently.

Summary

It is an object of embodiments of the present invention to improve control of queueing delay in intermediate network nodes.

According to a first aspect of the present invention there is provided a method for queue management in a packet-switched network comprising one or more intermediate network nodes. The method comprises at an intermediate network node: receiving packets; based on the received packets, determining a number of flows of the received packets; and signalling congestion of the received packets in accordance with a congestion signalling probability based on the determined number of flows.

Embodiments of the present invention are based *inter alia* on the insight that taking into account the number of flows in order to signal congestion helps to improve control of queueing delay in intermediate network nodes. In particular, by taking into account the number of flows, stable control can be achieved over a greater domain of control inputs, for example by improving reaction times and/or reducing oscillation of the queue management.

In a specific embodiment, the congestion signalling probability may further be based on at least one other indication of the network node, for example a load of the network node, a queue occupancy of the network node, and/or a queueing delay of the network node.

In a specific embodiment, signalling congestion of the received packets may comprise marking or dropping the received packets in order to signal to a downstream network node that the intermediate network node is congested, using a marking or dropping probability derived from the determined number of flows.

It is to be noted, in this specification, that, if a packet supports an explicit congestion notification (ECN) mechanism or the like, a network node may mark the packet, e.g. using specific ECN bits, to indicate to a receiver end-point and/or transmitter end-point of the packet that the network node is congested or is in danger of becoming congested, so without having to drop the packet. Moreover, it is to be noted, in this specification, that a packet may be dropped, for example by removing it from a queue without further transmitting it to its destination. In this case, it may be assumed that the destination may notice that the dropped packet is missing and may notify the source of this, so that the source may attempt to transmit the dropped packet again.

In a specific embodiment, a flow of the received packets may represent a plurality of packets belonging to a same packet protocol and sharing a same source and a same destination.

It is to be noted, in this specification, that a packet protocol may for example be a protocol like TCP (transport control protocol), but also another protocol, such as XCP (explicit control protocol), RCP (rate control protocol), VCP (variable structure congestion control protocol), *et cetera.* Moreover, it is to be noted, in this specification, that a source may for example be defined as a specific combination of a network-layer source address and a source port, and that a destination may for example be defined as a specific combination of a network-layer destination address and a destination port.

In a further developed embodiment, the method comprises generating a distribution of the received packets, by determining for each respective flow a respective measure pertaining to a number of packets of the received packets belonging to that respective flow. The number of flows is determined based on the generated distribution.

In this manner, it may not be required to know or trust reactions of flows to congestion signals.

In a further developed embodiment, the method comprises ageing the generated distribution when a packet is received, by decreasing respective measures corresponding to other flows than the flow to which the received packet belongs.

In this manner, the distribution may more relevantly indicate the number of flows, for example as older flows which may already have terminated may be given less weight.

In a further developed embodiment, the distribution is over a plurality of combinatorially possible sources; and determining the number of flows comprises determining the number of items of the generated distribution or the aged distribution whose measure differs from zero.

In this manner, a computationally simple procedure, e.g. tallying hash bin entries over a plurality of combinatorially possible sources, may be used.

In a specifically preferred embodiment, determining the number of flows comprises determining the number of items of the generated distribution or the aged distribution whose measure differs from zero by more than a predetermined threshold.

In this manner, the predetermined threshold may be determined based on simulations, in order to improve accuracy.

In a further developed embodiment, determining the number of flows comprises determining an entropy of the generated distribution or the aged distribution.

In this manner, a straightforward computation may be used.

In a further developed embodiment, the method comprises determining for each respective flow of the received packets a time measure representative for a round-trip time of the respective flow. The number of flows is determined based on a relation between a throughput capacity of the intermediate network node and the determined time measures.

In this manner, prediction of reactions of flows to congestion signals may be used more effectively.

In a further developed embodiment, the method comprises determining at least one fair-share throughput for at least one flow of the received packets, such that the sum throughput of the at least one fair-share throughput is less than a throughput capacity of the intermediate network node. The number of flows is determined based on a relation between a throughput capacity of the intermediate network node and the determined at least one fair-share throughput.

In this manner, knowledge of reactions of flows to congestion signals may be used more effectively.

According to another aspect of the present invention, there is provided a system for queue management in a packet-switched network. The system is configured for coupling to a receiver configured for receiving packets. The system is further configured for: based on the received packets, determining a number of flows of the received packets; and signalling congestion of the received packets in accordance with a congestion signalling probability based on the determined number of flows.

It will be understood by the skilled person that the features and advantages disclosed hereinabove with respect to various embodiments of the method may also apply, *mutatis mutandis,* to various embodiments of the system.

In a further developed embodiment, the system comprises a counting module configured for generating a distribution of the received packets, by determining for each respective flow a respective measure pertaining to a number of packets of the received packets belonging to that respective flow; and wherein the system is configured for determining the number of flows based on the generated distribution.

In a further developed embodiment, the counting module is configured for ageing the generated distribution when a packet is received, by decreasing respective measures corresponding to other flows than the flow to which the received packet belongs.

In a further developed embodiment, the distribution is over a plurality of combinatorially possible sources. The system is configured for determining the number of flows by determining the number of items of the generated distribution or the aged distribution whose measure differs from zero.

In a specifically preferred embodiment, the system is configured for determining the number of items of the generated distribution or the aged distribution whose measure differs from zero by more than a predetermined threshold.

In a further developed embodiment, the system is configured for determining the number of flows by determining an entropy of the generated distribution or the aged distribution.

In a further developed embodiment, the system is configured for determining for each respective flow of the received packets a time measure representative for a round-trip time of the respective flow; and configured for determining the number of flows based on a relation between a throughput capacity of the intermediate network node and the determined time measures.

In a further developed embodiment, the system is configured for determining at least one fair-share throughput for at least one flow of the received packets, such that the sum throughput of the at least one fair-share throughput is less than a throughput capacity of the intermediate network node; and configured for determining the number of flows based on a relation between a throughput capacity of the intermediate network node and the determined at least one fair-share throughput.

According to another aspect of the present invention, there is provided a network node for relaying packets in a packet-switched network, comprising a system according to any one of above-disclosed embodiments.

It will be understood by the skilled person that the features and advantages disclosed hereinabove with respect to various embodiments of the method and various embodiments of the system may also apply, *mutatis mutandis,* to various embodiments of the network node.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the computer program product.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the digital storage medium.

According to yet another aspect of the present invention, there is provided a device programmed to perform a method comprising the steps of any one of the methods of the method embodiments described above.

According to yet another aspect of the present invention, there is provided a method for downloading to a digital storage medium a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the method for downloading.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:

Figure 1 schematically illustrates an embodiment of a method according to the present invention;

Figure 2 schematically illustrates an embodiment of a system according to the present invention; and

Figure 3 schematically illustrates another embodiment of a method according to the present invention, e.g. a further development of that shown in Figure 1.

Description of embodiments

In order to control congestion on the Internet the end-points and the network nodes cooperate. Typically, a network node may measure its momentary congestion and may convey congestion signals (in particular by marking, delaying or dropping packets) to an endpoint, which the end-point may use to adjust the amount of traffic that it sends into the network.

While early congestion control algorithms were dimensioned based on the requirement that the throughput capacity C of a network node should be completely used, more recent ones are dimensioned such that the queuing delay is controlled (e.g. that the 99% percentile of the queuing delay is kept below the serialisation delay of one packet). It can be shown that queuing delay of a network node may relate to how load of that network node fluctuates, so that keeping queuing delay under control may be considered to be equivalent to keeping the load under control.

A known strategy of congestion signal algorithms, namely to determine the congestion signal based only on the load $\rho$ (or equivalently on queue occupancy b or queuing delay q) is often considered to be sufficient to keep the queuing delay under control.

However, it is an insight of the inventors that this is not always the case - in particular, it can be shown that operation of the network node may be improved by knowing how that load comes about, in particular by knowing how many flows produce that load.

It is to be noted that it is very likely that the number of flows per traffic volume (which is ever increasing by itself) on the network may increase significantly in the future. An intuitive reason for this is that sending information over K parallel flows may get more overall throughput than sending it over just 1 flow.

As mentioned above, if a network node monitors only the load p, it may not be capable of keeping queueing delay under control.

In a mathematical exposition below, it will be shown that monitoring the queue occupancy b(t) or queuing delay q(t) may be considered to be equivalent to monitoring the load $\rho$(t). In particular, queue occupancy b(t) and queuing delay q(t) may be completely determined once the load $\rho(t)$ is known (and, as long as the queue does not get empty, the reverse may be true as well). It will further be shown below that, if queuing delay needs to be kept under control, operation of a network node may be improved if the rule that the network node uses to determine the congestion signals depends on the number of flows and not only on the load.

Here, a qualitative reasoning for the same insight will be described. Assume that, in a first situation, a set of N flows is given for which the maximum introduced queuing delay is just acceptable. Then, in a second situation, consider the same set-up, wherein each single flow is replaced by K separate flows. In order to still keep the maximum queuing delay acceptable, in the second situation, each flow may need to be limited to producing only 1/K of the throughput that it had in the first situation, so that the same load and queuing delay result. However, if the load is the same in both situations, and if congestion signalling depends only on the load, the flows in the second situation may have a tendency to send at the (K times higher) throughput of the first situation, hence increasing the load by a factor K and increasing the queuing delay beyond what is acceptable.

It can therefore be concluded that congestion signals may advantageously to be determined based on the load and on the number of flows (as determined based on received packets).

Queuing delay may thus be kept better under control with embodiments of the present invention. In particular, embodiment of the present invention may scale better in terms of the number of active sources producing flows.

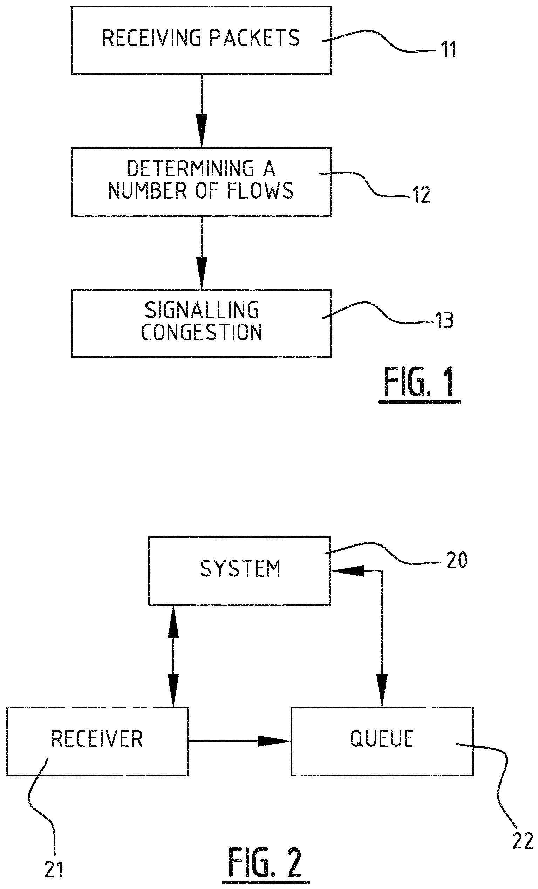

Figure 1 schematically illustrates an embodiment of a method according to the present invention. The method may comprise operations 11, 12 and 13.

Operation 11 may comprise receiving packets.

Operation 12 may comprise, based on the received packets, determining a number of flows of the received packets.

Operation 13 may comprise signalling congestion of the received packets in accordance with a congestion signalling probability based on the determined number of flows.

Figure 2 schematically illustrates an embodiment of a system 20 according to the present invention. The system may be suitable for managing a queue 22 in a packet-switched network. The system may be configured for coupling to a receiver 21 configured for receiving packets. In this specific embodiment, receiver 21 may be coupled to queue 22 for feeding it with the received packets, and system 20 may be coupled to queue 22 for managing it. System 20 may be further configured for, based on the received packets, determining a number of flows of the received packets; and for signalling congestion of the received packets in accordance with a congestion signalling probability based on the determined number of flows.

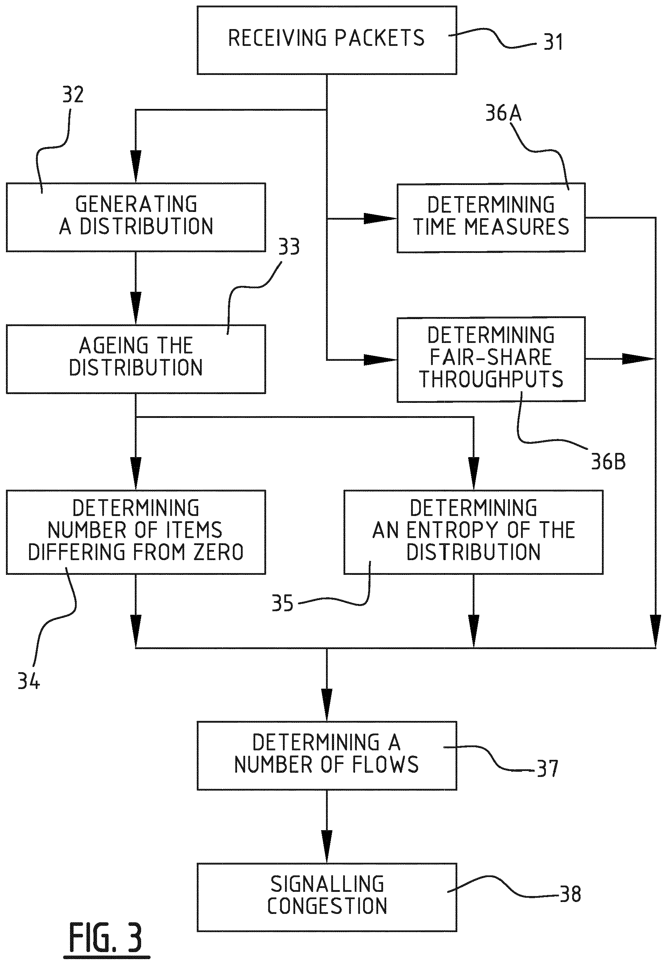

Figure 3 schematically illustrates another embodiment of a method according to the present invention, e.g. a further development of that shown in Figure 1. The figure shows operation 31, receiving packets, which may correspond to operation 11 of Figure 1. The figure also shows operation 37, determining a number of flows, which may correspond to operation 12 of Figure 1. The figure also shows operation 38, signalling congestion, which may correspond to operation 13 of Figure 1.

The figure also illustrates a number of further operations, belonging to different options for the method, which will be indicated in the description below.

In the mathematical exposition below, rules will be provided as to how the congestion signals may be determined as a function of the load and the number of flows for specific examples.

Most congestion signalling mechanisms rely on AQM (active queue management). They may observe the queue of a network node (for example averaged over some time) and may determine which percentage of the packets to drop or mark based on average queue occupancy. ARED (adaptive random early drop), CoDel (controlled delay), PIE (proportional integral enhanced) are examples of such mechanisms. It is to be remarked that it can be shown that the load on the network node may completely determine the queue occupancy and queuing delay.

Some proposed mechanism (e.g. XCP (explicit control protocol), RCP (rate control protocol), VCP (variable structure congestion control protocol), ...) may provide richer feedback than just 1 marked bit, based on the measured load. However, the same applies for these mechanisms.

It may thus be concluded that this may not be enough to keep queueing delay under control. Therefore, the number of flows may also need to be taken into account when making a marking (or dropping) decision.

Various embodiments may therefore estimate the number of active flows in some way and may use this estimated value (preferably in addition to using the measured load or equivalently queue occupancy or queuing delay) in order to determine congestion signals (in particular marks or drops) to signal to the end-points. An end-point may for example be the intended destination of a packet, but an end-point may also be the source of a packet (in particular if the source gets notified directly or indirectly by e.g. the intended destination about whether or not a packet has successfully been delivered).

It may be assumed that a rule to determine the congestion signal to be sent (e.g. how many packets are being marked or dropped), based on load and the number of flows (in order to keep queuing delay under control) is known, for example where the number of flows was previously not determined but rather a statically predefined number was used instead. In the mathematical exposition below, examples of such rules will be described. However, it is to be noted that other rules may also be used, based on the number of flows.

This rule may depend on how flows react to congestion signals. Different embodiments may therefore use one or more of the following different ways to estimate the number of flows.

In a first exemplary embodiment, the network node may predict how much throughput a flow may generate based on the congestion signal that it introduces and based on a model of how a flow may react to that. In this embodiment, the network node's throughput capacity C (also called link capacity or maximum transmission rate) divided by this estimated throughput may give an estimate for the number of flows that the network node is serving.

For example, for TCP RENO, it is known that the throughput $\lambda$ may be approximated as $1.22/(RTT \cdot \sqrt{p})$ (expressed in packets per second), were RTT is the round trip time and p is the congestion signalling probability, e.g. the marking or dropping probability with which the network node marks (or drops) packets in order to signal congestion to the receiver (which either echoes the congestion mark back to the transmitter or informs the transmitter of the lost packet by repeating acknowledgements of the packets it did receive). Since the network node knows with which probability p it marked (or dropped) packets, and since it can measure the average RTT (operation 36A of Figure 3), it can estimate the number N of flows it is supporting as $N=(C/1.22) \cdot (RTT \cdot \sqrt{P})$. For TCP CUBIC (and others), similar throughput formulae exist and hence the number N of flows can be determined in a similar way.

RTT in a network node may for example be estimated in real-time using techniques such as time correlation or spectral-based analysis.

For example, for RCP (rate control protocol), the sender may convey its (measured) RTT to the network node and the network node may determine (and explicitly signal) the rate R, as a fair-share throughput at which the flow can send (e.g. in a shim header), in operation 36B of Figure 3. In this case the number N of flows may for example be estimated as C/R.

In a second exemplary embodiment, the network node may be unaware of how flows will react to congestion signals, or it may not trust their reactions. In this case, the network node may try to determine the number of flows that it sees. The network node may for example monitor the following fields S = (network-layer source address, network-layer destination address, source port, destination port) of arriving packets and, based on that data, may estimate the number N of flows.

In this case, a distribution of the received packets may be generated (operation 31 of Figure 3), for example by determining for each respective flow a respective measure pertaining to a number of packets of the received packets belonging to that respective flow.

In a particular example thereof, a (running) distribution (e.g. a histogram, as a specific example of a distribution associating categories, here arriving strings, with counters) of arriving strings S may be made. All possible S values may be divided in L bins (consecutively, or via a hash function mapping each S in 1 of L possible hashes). Each time a packet with a particular S value is received, the corresponding bin may be increased by 1.

In a specifically preferred embodiment, the other bins may be aged (operation 33 of Figure 3), for example by multiplying them with a factor smaller than 1. In the more general terminology, this may correspond to decreasing the respective measures corresponding to other flows than the flow to which the received packet belongs.

There may be various ways to estimate the number N of flows based on such a distribution. Assume that h(l,t) is the (aged) measure of the l-th bin at time t.

A first approach to estimate N (in operation 37 of Figure 3) may be based on determining the number of bins that have a h(l,t) value different from zero (operation 34 of Figure 3). That number may be proportional to the number of flows.

In a further developed example, the number of bins may be determined that have such a h(l,t) value that is significantly different from zero, for example one that differs from zero by more than a predetermined threshold.

A second method may be based on determining the entropy $H = -\sum_l h(l,t)\ln(h(l,t))$ of the distribution (operation 35 of Figure 3), which may optionally be normalised. Then the number N of flows may then for example be estimated as $N = \exp(H)$ in operation 37 of Figure 3.

Below, a mathematical exposition will be provided, in particular to support the above reasoning.

Most congestion control algorithms in the network nodes determine which congestion signals to send based on the traffic load alone. It is to be noted that algorithms that are based on queue occupancy (or queuing delay), such as ARED, CoDel, PIE, fall in this category as well, as queue occupancy b(t) at time t may be directly determined by the amount A(t) of traffic arriving to the node up to and including that time t (via Reich's backlog theorem):

$$b(t) = \sup_{\tau < t}\{A(t) - A(\tau) - C \cdot (t - \tau)\} \quad (1)$$

where C is the throughput capacity of the network node. The load $\rho(t)$, which may be defined as $\rho(t) = A'(t)/C$ (where ' denotes the derivative), may completely determine the amount A(t) of information that the network node receives via

$$A(t) = C \cdot \int_{-\infty}^{t} dv \cdot \rho(v) \quad (2)$$

The queuing delay q(t) may be given by q(t) = b(t)/C. The value of $\tau(<t)$ where the supremum is reached in equation (1), may be the last time (prior to time t) that the queue was empty.

It is to be noted that a consequence of equations (1) and (2) is that the load $\rho(t)$ may completely determine the buffer occupancy b(t) and queuing delay q(t), but that the reverse statement need not be true: in particular, during periods that the queue is empty (i.e. b(t) = 0 or q(t) = 0), the buffer occupancy or queuing delay may not provide information as to what the load is; if q(t) = 0 (or b(t) = 0) it may only be concluded that the load $\rho(t)$ is less than 1, but not what its precise value is. Hence, taking decisions based on the load may be better than taking decisions based on queue occupancy or queuing delay.

For the two examples below an approximate analysis is provided that illustrates the following two statements, namely:

- Congestion signalling solely based on the measured load may not be able to keep delay under control in all situations.
- If, besides the measured load, the number of flows is also used to determine the congestion signals, the number of situations where queuing delay can be kept under control may increase.

In the following, C denotes a throughput capacity of a network node, $\lambda$ denotes a rate of a flow, N denotes the number of flows, $\rho$ denotes load on the network node, T (or RTT) denotes a (base) round-trip time of a flow, p denotes a marking or dropping probability, and q denotes a queueing delay. Assume in the following that a node marks (or drops) packets to signal congestion and that the receiver echoes these marks (or drops) to the transmitter in acknowledgements (ACKs).

In a first example, a rate-based congestion control mechanism with active load management (ALM) may be considered. Here,

- a flow may be sending at a rate $\lambda$ that depends on the marking (or dropping) ratio p that it notices in the ACKs that it gets (with $\alpha$ and $\beta$ given constants, depending on the type of packet protocol that is being used, for example TCP RENO, or DCTCP - it will be understood that the skilled person can determine $\alpha$ and $\beta$):

$$(3) \qquad \lambda = \frac{\beta}{p^{\alpha}}$$

- the network node may use active load management: it may mark (or drop) packets based on the load, with the following marking or dropping probability (with $\gamma$ a parameter to be chosen, in order to control the load p):

$$(4) \qquad p = \gamma \cdot \rho$$

Preferably, p may be set to 1 if this product else would be greater than 1.

If there are N flows, the system may fluctuate around a working point determined by the following equation:

$$(5) \qquad \rho = \frac{N \cdot \beta}{C \cdot (\gamma \cdot \rho)^{\alpha}}$$

This equation (5) expresses that the load on the network node is N times the load of individual flows, which is determined by the marking or dropping ratio that it sees, which in turn is determined by the load on the network node. It is to be noted that, even where know approaches use this equation or a similar equation, they fail to determine the number of flows, that is, based on the actually received packets, but rather use a statically predefined number instead, which holds no relation to the number of flows that are actually serviced. The solution to equation (5) is:

$$(6) \qquad \rho = \left( \frac{N \cdot \beta}{C \cdot \gamma^{\alpha}} \right)^{\left( \frac{1}{\alpha+1} \right)}$$

Since the marking or dropping process in a network node is random (given the probability p), there may be fluctuations around this average load. In order to keep the queuing delay 0 (or, preferably, in order to keep the queueing delay at 0 for a sufficiently high number of packets, for example 95% of the packets, or more preferably 99% of the packets), this average load may be set equal to $\rho_0$. If that value $\rho_0$ is chosen low enough, the probability of a spurious fluctuation temporarily increasing the load to a value larger than 1 (and hence causing queuing delay) may be low enough. In the above reasoning, it was implicitly assumed that the fluctuations around $\rho_0$ do not depend strongly on the number N of flows, so that $\rho_0$ can be chosen independently of N.

Choosing the value $\rho_0$, yields a rule for setting $\gamma$:

$$(7) \qquad \gamma = \left( \frac{N \cdot \beta}{C \cdot (\rho_0)^{\alpha+1}} \right)^{\left( \frac{1}{\alpha} \right)}$$

This shows that (once it is known how the flows react, i.e. once $\beta$ and $\alpha$ are known) and what the load needs to be to avoid queuing delay, it may be known how to adapt the marking or dropping rule in the network node - in this particular example, it may be known how to

choose $\gamma$. Equation (7) illustrates that the rule to determine the marking or dropping function may depend on the number N of flows.

Although this approximate analysis depends on a number of assumptions, the conclusion may remain the same in more complex situations.

In a second example, a window-based congestion control mechanism with active queue management (AQM) may be considered. Here,

- a flow may adjust its congestion window according to a rule, as is well-understood by the skilled person. Several strategies exist for that purpose (e.g. TCP RENO, TCP CUBIC, DCTCP, ...). For persistent flows, it is known that the throughput may approximately fluctuate around an average value given by:

$$\lambda = \frac{\beta}{(T+q)^{\alpha'} \cdot p^{\alpha}} \qquad (8)$$

where T denotes the RTT, and where $(\alpha',\alpha)$ may be (1,0.5), (0.25,0.75) and (1,1) for TCP RENO, TCP CUBIC and DCTCP respectively.

- the network node may use active queue management in order to send a congestion signal, e.g. (with $\gamma$, $q_{min}$ and $q_{max}$ tuneable parameters, e.g. 10 ms and 30 ms), using the following congestion signalling probability p:

$$p = \begin{cases} 0 & \text{if } (q < q_{min}) \\ \gamma \cdot (q - q_{min}) & \text{if } (q_{min} \leq q \leq q_{max}) \\ 1 & \text{if } (q > q_{max}) \end{cases} \qquad (9)$$

The system may be designed such that the network node is completely filled. In steady-state, each of the N flows may produce a throughput that fluctuates around the value given by equation (8), which may cause buffer occupancy to fluctuate around a value $q_0$. Averaged over a sufficiently long time, buffer fluctuations may be neglected, and all flows together may produce a bit rate C, yielding the following equation:

$$C = \frac{N \cdot \beta}{(T+q_0)^{\alpha'} \cdot (\gamma \cdot (q_0 - q_{min}))^{\alpha}} \qquad (10)$$

to determine the average $q_0$ around which the queuing delay may fluctuate. It is to be noted that if the parameter $\gamma$ scales according to:

$$\gamma \propto N^{\left(\frac{1}{\alpha}\right)} \qquad (11)$$

the solution of the transcendental equation (for $q_0$) may be independent of N. Hence, if a system is desired in which the (average) queuing delay $q_0$ does not depend on N, the rule to mark or drop packets may need to depend on N.

It is to be noted that this analysis depends on a number of assumptions, for example that the working point $q_0$ is such that fluctuations around the average queuing delay may remain in [$q_{min}$, $q_{max}$]. Moreover, it will be understood that the stability of the system may depend on the steepness of the marking or dropping rule (so, in this particular example, on $\gamma$).

Nevertheless, it may be concluded that the marking or dropping rule may depend on the number of flows, in order to keep the queuing delay (better) under control.

A person of skill in the art would readily recognize that steps of various above-described methods can be performed by programmed computers. Herein, some embodiments are also intended to cover program storage devices, e.g. digital data storage media, which are machine or computer readable and encode machine-executable or computer-executable programs of instructions, wherein said instructions perform some or all of the steps of said above-described methods. The program storage devices may be, e.g. digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. A method for queue management in a packet-switched network comprising one or more intermediate network nodes, the method comprising at an intermediate network node:

   - receiving packets;
   - based on the received packets, determining a number of flows of the received packets; and
   - signalling congestion of the received packets in accordance with a congestion signalling probability based on the determined number of flows.

2. The method of any one of the previous claims, comprising generating a distribution of the received packets, by determining for each respective flow a respective measure pertaining to a number of packets of the received packets belonging to that respective flow; and wherein the number of flows is determined based on the generated distribution.

3. The method of claim 2, comprising ageing the generated distribution when a packet is received, by decreasing respective measures corresponding to other flows than the flow to which the received packet belongs.

4. The method of claim 2 or 3, wherein the distribution is over a plurality of combinatorially possible sources; and wherein determining the number of flows comprises determining the number of items of the generated distribution or the aged distribution whose measure differs from zero, preferably by more than a predetermined threshold.

5. The method of claim 2, 3 or 4, wherein determining the number of flows comprises determining an entropy of the generated distribution or the aged distribution.

6. The method of any one of the previous claims, comprising determining for each respective flow of the received packets a time measure representative for a round-trip time of the respective flow; and wherein the number of flows is determined based on a relation between a throughput capacity of the intermediate network node and the determined time measures.

7. The method of any one of the previous claims, comprising determining at least one fair-share throughput for at least one flow of the received packets, such that the sum throughput of the at least one fair-share throughput is less than a throughput capacity of the intermediate network node; and wherein the number of flows is determined based on a relation between a throughput capacity of the intermediate network node and the determined at least one fair-share throughput.

8. A system for queue management in a packet-switched network, the system being configured for coupling to a receiver configured for receiving packets, the system being configured for:

    - based on the received packets, determining a number of flows of the received packets; and
    - signalling congestion of the received packets in accordance with a congestion signalling probability based on the determined number of flows.

9. The system of claim 8, comprising a counting module configured for generating a distribution of the received packets, by determining for each respective flow a respective measure pertaining to a number of packets of the received packets belonging to that respective flow; and wherein the system is configured for determining the number of flows based on the generated distribution.

10. The system of claim 9, wherein the counting module is configured for ageing the generated distribution when a packet is received, by decreasing respective measures corresponding to other flows than the flow to which the received packet belongs.

11. The system of claim 9 or 10, wherein the distribution is over a plurality of combinatorially possible sources; and wherein the system is configured for determining the number of flows by determining the number of items of the generated distribution or the aged distribution whose measure differs from zero, preferably by more than a predetermined threshold.

12. The system of claim 9, 10 or 11, configured for determining the number of flows by determining an entropy of the generated distribution or the aged distribution.

13. The system of any one of the claims 8-12, configured for determining for each respective flow of the received packets a time measure representative for a round-trip time of the respective flow; and configured for determining the number of flows based on a relation between a throughput capacity of the intermediate network node and the determined time measures.

14. The system of any one of the claims 8-13, configured for determining at least one fair-share throughput for at least one flow of the received packets, such that the sum throughput of the at least one fair-share throughput is less than a throughput capacity of the intermediate network node; and configured for determining the number of flows based on a relation between a throughput capacity of the intermediate network node and the determined at least one fair-share throughput.

15. A computer program product comprising a computer-executable program of instructions for performing, when executed on a computer, the steps of the method of any one of claims 1-7.

**Amended claims in accordance with Rule 137(2) EPC.**

1. A method for queue management in a packet-switched network comprising one or more intermediate network nodes, the method comprising at an intermediate network node:

    - receiving packets;
    - based on the received packets, determining a number of flows of the received packets; and
    - signalling congestion of the received packets in accordance with a congestion signalling probability based on the determined number of flows;

    wherein the method further comprising generating a distribution of the received packets, by determining for each respective flow a respective measure pertaining to a number of packets of the received packets belonging to that respective flow; and wherein the number of flows is determined based on the generated distribution.

2. The method of claim 1, comprising ageing the generated distribution when a packet is received, by decreasing respective measures corresponding to other flows than the flow to which the received packet belongs.

3. The method of claim 1 or 2, wherein the distribution is over a plurality of combinatorially possible sources; and wherein determining the number of flows comprises determining the number of items of the generated distribution or the aged distribution whose measure differs from zero, preferably by more than a predetermined threshold.

4. The method of claim 1, 2 or 3, wherein determining the number of flows comprises determining an entropy of the generated distribution or the aged distribution.

5. The method of any one of the previous claims, comprising determining for each respective flow of the received packets a time measure representative for a round-trip time of the respective flow; and wherein the number of flows is determined based on a relation between a throughput capacity of the intermediate network node and the determined time measures.

**6.** The method of any one of the previous claims, comprising determining at least one fair-share throughput for at least one flow of the received packets, such that the sum throughput of the at least one fair-share throughput is less than a throughput capacity of the intermediate network node; and wherein the number of flows is determined based on a relation between a throughput capacity of the intermediate network node and the determined at least one fair-share throughput.

**7.** A system for queue management in a packet-switched network, the system being configured for coupling to a receiver configured for receiving packets, the system being configured for:

- based on the received packets, determining a number of flows of the received packets; and
- signalling congestion of the received packets in accordance with a congestion signalling probability based on the determined number of flows;

Wherein the system further comprising a counting module configured for generating a distribution of the received packets, by determining for each respective flow a respective measure pertaining to a number of packets of the received packets belonging to that respective flow; and wherein the system is configured for determining the number of flows based on the generated distribution.

**8.** The system of claim 7, wherein the counting module is configured for ageing the generated distribution when a packet is received, by decreasing respective measures corresponding to other flows than the flow to which the received packet belongs.

**9.** The system of claim 7 or 8, wherein the distribution is over a plurality of combinatorially possible sources; and wherein the system is configured for determining the number of flows by determining the number of items of the generated distribution or the aged distribution whose measure differs from zero, preferably by more than a predetermined threshold.

**10.** The system of claim 7, 8 or 9, configured for determining the number of flows by determining an entropy of the generated distribution or the aged distribution.

**11.** The system of any one of the claims 7-10, configured for determining for each respective flow of the received packets a time measure representative for a round-trip time of the respective flow; and configured for determining the number of flows based on a relation between a throughput capacity of the intermediate network node and the determined time measures.

**12.** The system of any one of the claims 7-11, configured for determining at least one fair-share throughput for at least one flow of the received packets, such that the sum throughput of the at least one fair-share throughput is less than a throughput capacity of the intermediate network node; and configured for determining the number of flows based on a relation between a throughput capacity of the intermediate network node and the determined at least one fair-share throughput.

**13.** A computer program product comprising a computer-executable program of instructions for performing, when executed on a computer, the steps of the method of any one of claims 1-6.

RECEIVING PACKETS ——11

DETERMINING A
NUMBER OF FLOWS ——12

SIGNALLING
CONGESTION ——13

<u>FIG. 1</u>

SYSTEM ——20

RECEIVER

QUEUE

<u>FIG. 2</u>

21

22

**FIG. 3**

Flowchart:

RECEIVING PACKETS — 31

32 → GENERATING A DISTRIBUTION

33 → AGEING THE DISTRIBUTION

36A → DETERMINING TIME MEASURES

DETERMINING FAIR-SHARE THROUGHPUTS — 36B

DETERMINING NUMBER OF ITEMS DIFFERING FROM ZERO — 34

DETERMINING AN ENTROPY OF THE DISTRIBUTION — 35

DETERMINING A NUMBER OF FLOWS — 37

SIGNALLING CONGESTION — 38

Europäisches
Patentamt

European
Patent Office

Office européen
des brevets

# EUROPEAN SEARCH REPORT

Application Number

EP 16 30 6751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OTT T J ET AL: "SRED: stabilized RED", INFOCOM '99. EIGHTEENTH ANNUAL JOINT CONFERENCE OF THE IEEE COMPUTER A ND COMMUNICATIONS SOCIETIES. PROCEEDINGS. IEEE NEW YORK, NY, USA 21-25 MARCH 1999, PISCATAWAY, NJ, USA,IEEE, US, vol. 3, 21 March 1999 (1999-03-21), pages 1346-1355, XP010323866, ISBN: 978-0-7803-5417-3 | 1,3-15 | INV. H04L12/801  ADD. H04L12/823 H04L12/833 |
| Y | * page 1348, right-hand column * * Sections III and IV; page 1347 * | 2 | |
| Y | GUANG CHENG: "Estimating the number of active flows from sampled packets", 2012 IEEE NETWORK OPERATIONS AND MANAGEMENT SYMPOSIUM (NOMS 2012) : MAUI, HAWAII, USA, 16 - 20 APRIL 2012, IEEE, PISCATAWAY, NJ, 16 April 2012 (2012-04-16), pages 675-678, XP032448736, DOI: 10.1109/NOMS.2012.6211984 ISBN: 978-1-4673-0267-8 * section IV. A. Estimating Short Flow Length Distribution.; page 676, right-hand column * | 2 | |

TECHNICAL FIELDS
SEARCHED (IPC)

H04L

The present search report has been drawn up for all claims

| Place of search | Date of completion of the search | Examiner |
|---|---|---|
| The Hague | 7 July 2017 | Tsuchiya, Kuni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)